Europäisches Patentamt

European Patent Office

Office européen des brevets

(19)

(11) Veröffentlichungsnummer : **0 102 584**
**B1**

(12) **EUROPÄISCHE PATENTSCHRIFT**

(45) Veröffentlichungstag der Patentschrift :
30.12.86

(51) Int. Cl.⁴ : **C 02 F   3/30, C 02 F   3/10**

(21) Anmeldenummer : **83108296.1**

(22) Anmeldetag : **23.08.83**

(54) **Verfahren zur Denitrifikation von Wasser.**

(30) Priorität : 28.08.82 DE 3232095

(43) Veröffentlichungstag der Anmeldung :
**14.03.84 Patentblatt 84/11**

(45) Bekanntmachung des Hinweises auf die Patenterteilung : **30.12.86 Patentblatt 86/52**

(84) Benannte Vertragsstaaten :
**BE CH DE FR IT LI NL**

(56) Entgegenhaltungen :
**EP-A- 0 004 304**
**EP-A- 0 075 297**
**FR-A- 2 476 629**
**GB-A- 1 412 587**
**US-A- 4 137 200**

(73) Patentinhaber : **Linde Aktiengesellschaft**
**Abraham-Lincoln-Strasse 21**
**D-6200 Wiesbaden (DE)**

(72) Erfinder : **Fuchs, Uwe, Ing.-grad.**
**Heiterwanger Strasse 46**
**D-8000 München 70 (DE)**

(74) Vertreter : **Schaefer, Gerhard, Dr.**
**Linde Aktiengesellschaft Zentrale Patentabteilung**
**D-8023 Höllriegelskreuth (DE)**

Jouve, 18, rue St-Denis, 75001 Paris, France

EP 0 102 584 B1

## Beschreibung

Die Erfindung betrifft ein Verfahren zur Denitrifikation von zumindest weitgehend kohlenstofffreiem Wasser, bei dem das zu denitrifizierende Wasser durch einen Reaktor, in dem ein Trägermaterial für die Denitrifikanten vorhanden ist, geleitet wird.

Im Abwasser enthaltener Stickstoff wird in biologischen Kläranlagen bekanntlich durch Nitrifikation und Denitrifikation eliminiert. Bei der Nitrifikation, die hauptsächlich erst nach weitgehender Oxidation der Kohlenstoffverbindungen erfolgt und niedrige Schlammbelastungen, ausreichende Sauerstoffzufuhr und hohes Schlammalter voraussetzt, wird Ammoniumstickstoff durch autotrophe Bakterien zu Nitrat und Nitrit umgewandelt. Bei der Denitrifikation wird unter anoxischen Bedingungen Nitrat und Nitrit zu elementarem Stickstoff reduziert. Die Reduktion erfolgt dabei über fakultativ anaerobe Bakterien, die über ein Elektronentransportsystem verfügen, welches sie zur Elektronenübertragung auf Nitrite und Nitrate befähigt. Die Denitrifikationsbakterien sind so in die Lage versetzt, organisches Substrat auch ohne molekularen Sauerstoff weitgehend zu oxidieren und dadurch Energie zu gewinnen. Formal werden dabei organische Stoffe durch Nitrit und Nitrat zu Kohlendioxid und Wasser oxidiert. Damit gilt, daß für eine weitgehende Nitratreduktion zu molekularem Stickstoff ausreichend organischer Kohlenstoff zugegen sein muß. Als Kohlenstoffquelle wird bisher das der Kläranlage zugeführte Rohabwasser oder ein gesondert zugeführtes kohlenstoffhaltiges Substrat, wie z. B. Methanol, verwendet.

Die Durchführung der Denitrifikation erfolgt dabei entweder in einer den Belebungs- und Nitrifikationszonen vorgeschalteten anoxischen Zone, die gegebenenfalls ein Trägermaterial für die Denitrifikanten enthalten kann, unter Aufrechterhaltung eines ausreichenden Kohlenstoffangebotes, wobei der nitrat- und nitrithaltige, kohlenstofffreie Abwasserstrom aus der Nitrifikationszone in die anoxische Zone rezirkuliert wird, oder in einer der Nitrifikationszone nachgeschalteten anoxischen Zone, die gegebenenfalls ebenso ein Trägermaterial für die Denitrifikanten enthalten kann, mit Dosierung von BSB-haltigem Rohabwasser als Kohlenstoffquelle. Die Rezirkulierungsverfahren erfordern jedoch große, energieaufwendige Rücklaufverhältnisse und führen durch die Vorschaltung der anoxischen Zone zu einer Verschlechterung des Stickstoffeliminationsgrades der gesamten Abwasserreinigungsanlage. Bei der Nachschaltung der anoxischen Zone verschlechtert die Zugabe des kohlenstoffhaltigen Substrats den BSB5-Wert des Ablaufs. Beide Verfahren sind somit bei der Trinkwassergewinnung nicht anwendbar.

Der Erfindung liegt die Aufgabe zugrunde, ein Verfahren der eingangs genannten Art so auszugestalten, daß auf einfache und wirtschaftliche Weise eine möglichst weitgehende Stickstoffentfernung ohne Beeinträchtigung der Ablaufqualität des behandelten Wassers erreicht werden kann.

Diese Aufgabe wird erfindungsgemäß dadurch gelöst, daß das Trägermaterial vor dem Durchleiten von zu denitrifizierendem Wasser durch den Reaktor mit solchen organischen Substanzen imprägniert wird, die den Denitrifikanten als Reduktionsmittel dienen.

Der Erfindung liegt die Erkenntnis zugrunde, daß mit der Imprägnierung des Trägermaterials mit organischen Substanzen auf überraschend einfache Weise eine Verschlechterung des Ablauf-BSB5 vermieden werden kann, da dann die für die Denitrifikation im Überschuß zu dosierenden organischen Substanzen nicht mehr in das zu denitrifizierende Wasser gelangen. Das erfindungsgemäße Verfahren kann somit sowohl bei der Abwasserreinigung als auch in der Trinkwasseraufbereitung eingesetzt werden, wobei das Verfahren in den üblichen, zur Denitrifikation verwendeten Reaktoren, wie beispielsweise in einem Tropfkörper, in einem Wirbelbett- oder Festbettreaktor oder in einem volldurchmischten Belebungsbecken, durchgeführt werden kann.

Vorteilhafterweise werden dabei als organische Substanzen zumindest teilweise wasserunlösliche, biologisch abbaubare Verbindungen verwendet. Mit diesen wird dann zweckmäßigerweise die Imprägnierung eines nicht oberflächenaktiven Trägermaterials durchgeführt. Damit kann mit Sicherheit vermieden werden, daß die organischen Substanzen in das zu denitrifizierende Wasser gelangen und dessen Ablaufqualität beeinträchtigen. Als Beispiele für zumindest teilweise wasserunlösliche Verbindungen, die den Denitrifikanten bei dem erfindungsgemäßen Verfahren als Kohlenstoffreservoir dienen, können Kohlenwasserstoffe oder Zellulose genannt werden. Diese können in einer dünnen Schicht auf nicht oberflächenaktiven Trägermaterialien wie Sand, Kies, Plastikfüllkörpern, Polyurethanschaumstoffteilchen oder mineralisch porösen Materialien wie Lavaschlacke oder Blähton aufgebracht werden. Wird z. B. Polyurethanschaumstoff als Trägermaterial verwendet, kann die Einsatzdauer erheblich verlängert werden, wenn das Porengerüst und somit das gesamte Trägervolumen vollständig mit einer der obengenannten wasserunlöslichen Substanzen ausgefüllt wird.

Neben den bereits genannten Trägermaterialien können darüberhinaus mit Vorteil als nicht oberflächenaktive Trägermaterialien Harnstoff-Formaldehydharze und/oder Polyäthylen und/oder Polypropylen und/oder Polyurethane und/oder Silikonpolymere und/oder Naturschwämme verwendet werden. Diese Trägermaterialien haben den Vorteil, daß sie physiologisch unbedenklich sind. Sie können damit insbesondere bei der Denitrifikation von Trinkwasser zur Anwendung kommen.

Zweckmäßig ist es dabei, diese Trägermaterialien in offenzellig geschäumter oder gesinterter stückiger Form zu verwenden, da dann sowohl den organischen Substanzen als auch den Denitrifikanten eine große Oberfläche zum Festsetzen zur Verfügung gestellt wird, die aufgrund ihrer Struktur stabile Ansammlungen gewährleistet.

Eine weitere Möglichkeit mit Sicherheit zu vermeiden, daß die organischen Substanzen das zu denitrifizierende Wasser beeinflussen besteht darin, als organische Substanzen wasserlösliche, biologisch abbaubare Verbindungen zu verwenden und mit diesen die Imprägnierung eines adsorbtiven oberflächenaktiven Trägermaterials durchzuführen. Als wasserlösliche, biologisch abbaubare Verbindungen werden dabei zweckmäßigerweise Zucker und/oder Gelatine und/oder Stärke und/oder Alkohole, wie z. B. Äthanol, verwendet, die physiologisch unbedenklich sind. Solche Verbindungen können dann adsorbtiv auf oberflächenaktiven Trägermaterialien, wie Aktivkohle oder Zeolithe, fixiert werden.

Zur Imprägnierung des Trägermaterials wird dieses in Weiterbildung des Erfindungsgedankens entweder zumindest teilweise in ein aus der entsprechenden organischen Substanz gebildetes Bad eingebracht oder es werden auf das Trägermaterial zumindest teilweise Staubteilchen einer entsprechenden organischen Substanz aufgeblasen. Welche der beiden Möglichkeiten zur Imprägnierung des Trägermaterials angewandt wird, hängt davon ab, in welchem Aggregatzustand, fest oder flüssig, die zum Einsatz kommende organische Substanz vorliegt. Sollen Mischungen aus organischen Substanzen auf das Trägermaterial aufgebracht werden, kann es unter Umständen zweckmäßig sein, beide Methoden hintereinander durchzuführen. Die Trockenbeladung und auch der Tauchvorgang führt in jedem Fall im Ergebnis dazu, daß vor dem Einleiten des zu denitrifizierenden Wassers in den Reaktor auf dem Trägermaterial bereits eine dünne Schicht aus organischen Substanzen vorhanden ist, die den im Laufe des Denitrifikationsvorganges sich ausbildenden Denitrifikanten, die sich zusätzlich auf dem Trägermaterial ansiedeln werden, als Kohlenstoffquelle zur Verfügung stehen. Um den Beginn des Denitrifikationsvorganges zu beschleunigen, ist es unter Umständen weiterhin zweckmäßig, zusätzlich zur Imprägnierung des Trägermaterials mit organischen Substanzen in gleicher Weise auch eine Imprägnierung mit Denitrifikanten durchzuführen und erst danach das so verbehandelte Trägermaterial in den Denitrifikationsreaktor einzugeben.

Um eine kontinuierliche Denitrifikationsleistung sicherstellen zu können, ist es weiterhin zweckmäßig, entweder kontinuierlich oder chargenweise das Trägermaterial aus dem Denitrifikationsreaktor abzuziehen, neu mit organischen Substanzen zu imprägnieren und danach wieder in den Denitrifikationsreaktor zurückzuleiten. Damit ist sichergestellt, daß den Denitrifikanten immer eine ausreichende Kohlenstoffquelle zur Verfügung steht.

Insbesondere bei der Trinkwasseraufbereitung ist es außerdem zweckmäßig, das denitrifizierte Wasser nach dem Ableiten aus dem Denitrifikationsreaktor durch ein Filter zur Entfernung eventuell vorhandener Biomasse oder nicht oxidierter Reduktionssubstanz zu leiten. Als Filter kann beispielsweise ein biologisch arbeitendes, belüftetes Feinstfilter verwendet werden. Gegebenenfalls kann das Filter auch zweistufig ausgebildet sein.

**Patentansprüche**

1. Verfahren zur Denitrifikation von zumindest weitgehend kohlenstofffreiem Wasser, bei dem das zu denitrifizierende Wasser durch einen Reaktor, in dem ein Trägermaterial für die Denitrifikanten vorhanden ist, geleitet wird, dadurch gekennzeichnet, daß das Trägermaterial vor dem Durchleiten von zu denitrifizierendem Wasser durch den Reaktor mit solchen organischen Substanzen imprägniert wird, die den Denitrifikanten als Reduktionsmittel dienen.

2. Verfahren nach Anspruch 1, dadurch gekennzeichnet, daß als organische Substanzen zumindest teilweise wasserunlösliche, biologisch abbaubare Verbindungen verwendet werden und mit diesen die Imprägnierung eines nicht oberflächenaktiven Trägermaterials durchgeführt wird.

3. Verfahren nach Anspruch 2, dadurch gekennzeichnet, daß als nicht oberflächenaktives Trägermaterial Harnstoff-Formaldehydharze und/oder Polyäthylen und/oder Polypropylen und/oder Polyurethane und/oder Silikonpolymere und/oder Naturschwämme verwendet werden.

4. Verfahren nach Anspruch 3, dadurch gekennzeichnet, daß die nicht oberflächenaktiven Trägermaterialien in offenzellig geschäumter oder gesinterter stückiger Form verwendet werden.

5. Verfahren nach Anspruch 1, dadurch gekennzeichnet, daß als organische Substanzen wasserlösliche, biologisch abbaubare Verbindungen verwendet werden und mit diesen die Imprägnierung eines adsorbtiven oberflächenaktiven Trägermaterials durchgeführt wird.

6. Verfahren nach Anspruch 5, dadurch gekennzeichnet, daß als wasserlösliche, biologisch abbaubare Verbindungen Zucker und/oder Stärke und/oder Gelatine und/oder Alkohole verwendet werden.

7. Verfahren nach einem der Ansprüche 1 bis 6, dadurch gekennzeichnet, daß zur Imprägnierung des Trägermaterials dieses zumindest teilweise in ein aus der entsprechenden organischen Substanz gebildetes Bad eingebracht wird.

8. Verfahren nach einem der Ansprüche 1 bis 7, dadurch gekennzeichnet, daß zur Imprägnierung des Trägermaterials auf dieses zumindest teilweise Staubteilchen einer entsprechenden organischen Substanz aufgeblasen werden.

9. Verfahren nach einem der Ansprüche 1 bis 8, dadurch gekennzeichnet, daß das denitrifizierte Wasser durch ein biologisches Filter zur Entfernung eventuell vorhandener Biomasse oder nicht oxidierter Reduktionssubstanz geleitet wird.

## Claims

1. A process for the denitrification of water which is at least largely free from carbon, in which the water to be denitrified is passed through a reactor which contains a carrier material for the denitrifying agents, characterised in that before the water to be denitrified is passed through the reactor, the carrier material is impregnated with organic substances such as will serve as reducing agents for the denitrifying agents.

2. A process as claimed in Claim 1, characterised in that biologically degradable compounds which are at least partially insoluble in water are used as organic substances and the impregnation of a carrier material which is not surface-active is carried out which these compounds.

3. A process as claimed in Claim 2, characterised in that urea-formaldehyde resins and/or polyethylenes and/or polypropylenes and/or polyurethanes and/or silicone polymers and/or natural sponges are used as non-surface active carrier material.

4. A process as claimed in Claim 3, characterised in that the non-surface active carrier materials are used in the form of open-celled foam, or in the form of sintered pieces.

5. A process as claimed in Claim 1, characterised in that water-soluble, biologically-degradable compounds are used as organic substances and the impregnation of an adsorptive surface-active carrier material is carried out which such compounds.

6. A process as claimed in Claim 5, characterised in that sugar and/or starch and/or gelatine and/or alcohols are used as water-soluble, biologically-degradable compounds.

7. A process as claimed in one of Claims 1 to 6, characterised in that for the impregnation of the carrier material, the latter is at least partially introduced into a bath formed from the corresponding organic substance.

8. A process as claimed in one of Claims 1 to 7, characterised in that for the impregnation of the carrier material, dust particles of a suitable organic substance are at least partially blown on to the carrier material.

9. A process as claimed in one of Claims 1 to 8, characterised in that the denitrified water is passed through a biological filter to remove biomass or non-oxidized reducing substance which may be present.

## Revendications

1. Procédé pour la dénitrification d'une eau au moins en majeure partie exempte de carbone, dans lequel on fait passer l'eau à dénitrifier à travers un réacteur qui contient un matériau de support pour l'agent de dénitrification, caractérisé en ce que le matériau de support, avant la traversée du réacteur par l'eau à dénitrifier, est imprégné par des substances organiques qui servent d'agents de réduction à l'égard de l'agent de dénitrification.

2. Procédé selon la revendication 1, caractérisé en ce que l'on emploie comme substances organiques, des composés au moins partiellement insolubles dans l'eau, biologiquement dégradables, et en ce qu'on imprègne avec ceux-ci un matériau de support superficiellement inactif.

3. Procédé selon la revendication 2, caractérisé en ce que, comme matériau de support superficiellement inactif, on utilise des résines formaldéhydes et/ou du polyéthylène et/ou du polypropylène et/ou du polyuréthane et/ou des polymères de silicone et/ou des éponges naturelles.

4. Procédé selon la revendication 3, caractérisé en ce que l'on utilise les matériaux de support superficiellement inactifs sous la forme de mousses à cellules ouvertes ou d'éléments frittés.

5. Procédé selon la revendication 1, caractérisé en ce que l'on utilise comme substances organiques des composés solubles dans l'eau, biologiquement dégradables, et en ce que l'on effectue avec ceux-ci l'imprégnation d'un matériau de support adsorbant, actif en surface.

6. Procédé selon la revendication 5, caractérisé en ce que l'on utilise comme composés biologiquement dégradables, solubles dans l'eau, des sucres et/ou des amidons et/ou de la gélatine et/ou des alcools.

7. Procédé selon l'une des revendications 1 à 6, caractérisé en ce que, pour l'imprégnation du matériau de support, on introduit celui-ci au moins partiellement dans un bain constitué à partir de la substance organique correspondante.

8. Procédé selon l'une des revendications 1 à 7, caractérisé en ce que, pour l'imprégnation du matériau de support, on dépose sur celui-ci au moins en partie des particules d'une substance organique appropriée.

9. Procédé selon l'une des revendications 1 à 8, caractérisé en ce qu'on fait passer l'eau à dénitrifier à travers un filtre biologique pour l'élimination de biomasse ou de substances réductrices non oxydées éventuellement existante.